# EUROPEAN PATENT APPLICATION

(11) **EP 2 305 988 A1**
(43) Date of publication of application: **06.04.2011**
(21) Application number: 09802712.1
(22) Date of filing: 29.07.2009
(51) Int. Cl.: F02D 29/02

(54) **FUEL SAVING DRIVING DIAGNOSTIC EQUIPMENT, IN-VEHICLE SYSTEM, DRIVE CONTROL APPARATUS, AND FUEL SAVING DRIVING DIAGNOSTIC PROGRAM**

(30) Priority: 30.07.2008 JP 2008197014
(71) Applicant: Toyota Jidosha Kabushiki Kaisha, Toyota-shi, Aichi 471-8571 (JP)
(72) Inventor: HARUMOTO, Satoshi, Kobe-shi Hyogo 652-8510 (JP); KIYO, Kouei, Kobe-shi Hyogo 652-8510 (JP); TAKEUCHI, Shojiro, Toyota-shi Aichi 471-8571 (JP); TAUCHI, Nobutaka, Kariya-shi Aichi 448-8661 (JP)
(74) Representative: TBK-Patent
(86) International application number: PCT/JP2009/003587
(87) International publication number: WO 2010/013463

(57) **Abstract**

A fuel-saving driving diagnosis apparatus detects that a vehicle stopped, counts the number of stops, and determines whether the vehicle raced after detection that the vehicle stopped. After that, in the case where it is determined that the stopped vehicle raced, the fuel-saving driving diagnosis apparatus calculates the number of times of stop followed by racing done by the vehicle. The fuel-saving driving diagnosis apparatus diagnoses fuel-saving driving of a driver based on the counted number of stops and the counted number of times of stop followed by racing.

## Description

### TECHNICAL FIELD

The present invention relates to a fuel-saving driving diagnosis apparatus, an in-vehicle system, a drive control apparatus, and a fuel-saving driving diagnosis program for diagnosing fuel-saving driving of a driver in a vehicle.

### BACKGROUND ART

Recently, attention is being paid to global environmental issues such as global warming countermeasures, and emissions of carbon dioxide caused by use of fossil fuel such as petroleum oil, particularly, emission gas of vehicles using gasoline has become problematic.

As a countermeasure against such a problem, various electric cars which can reduce emission gas such as a solar car using a solar battery as a power source, a fuel-cell-powered car using a fuel cell, and a hybrid car using gasoline and power (electric motor) are being developed.

However, it cannot be said the electric cars are disperse in the general public, and a car which is most used at present is a conventional car using gasoline. Consequently, as a countermeasure against global environmental problems, it is necessary to reduce emission gas from a car using gasoline (including a hybrid car).
For such a reason, recently, various techniques for urging the driver of a car to reduce exhaust gas were disclosed.

For example, as a technique for urging reduction in exhaust gas, a technique of determining whether racing is done or not and, when it is determined that racing is done, warning the driver is disclosed (refer to, for example, patent document 1).

### CONVENTIONAL ART DOCUMENT

### PATENT DOCUMENT

Patent Document 1: Japanese Patent Application Laid-open No. 2007-326574

### DISCLOSURE OF INVENTION

### PROBLEM TO BE SOLVED BY THE INVENTION

However, the conventional technique does not educate each of drivers to perform fuel-saving driving, and has a problem that a countermeasure to reduce an act of racing of a driver is insufficient.

More concretely, in the conventional technique, each time racing is done, a warning is just given to a driver without consideration whether the driver frequently drives or drives on only weekends. That is, when a warning is just given to the driver each time the driver races, the driver cannot grasp how much fuel consumed in vain by racing or emission gas exhausted in vain. Therefore, even if racing is determined and a warning is given by using the conventional technique, it is insufficient as a warning to each driver.

Therefore, the present invention has been achieved to solve the problems of the conventional techniques, and an object of the present invention is to educate each driver about fuel-saving driving to increase awareness and knowledge on wasteful fuel consumption of the driver by presenting how often the driver races each time a vehicle stops.

### MEANS FOR SOLVING PROBLEM

In order to solve the above mentioned problem and achieve the object, a fuel-saving driving diagnosis apparatus according to the present invention includes: a stop detecting unit that detects that a vehicle stopped; a stop times counting unit that counts the number of stops detected by the stop detecting unit; a racing determining unit that determines whether the vehicle raced or not after the stop detecting unit detects that the vehicle stopped; a racing stop detecting unit that counts the number of times of stop followed by racing which is determined by the racing determining unit; and a fuel-saving driving diagnosis unit that diagnoses fuel-saving driving based on the number of stops counted by the stop times counting unit and the number of stops followed by racing, counted by the racing stop detecting unit.

### EFFECT OF THE INVENTION

According to the present invention, the frequency of occurrence of racing and a habit of a driver are diagnosed and a result of diagnosis is presented to the driver, so that knowledge and awareness on fuel-saving driving of the driver can be improved. Accordingly, for example, racing at the time of a stop of a vehicle caused by heating during cold time or the like which is unnecessary for a car today is suppressed, and a fuel consumption amount is suppressed. In addition, emission gas can also be reduced.

### BRIEF DESCRIPTION OF DRAWINGS

[Fig. 1] Fig. 1 is a block diagram showing a configuration of an in-vehicle system including a fuel-saving driving diagnosis apparatus according to a first embodiment.
[Fig. 2] Fig. 2 is a diagram showing criteria to judge racing.
[Fig. 3] Fig. 3 is a flowchart showing a flow of fuel-saving driving diagnosis processes in the fuel-saving driving diagnosis apparatus according to the first embodiment.
[Fig. 4] Fig. 4 is a flowchart showing a flow of processes of counting the number of stops in the fuel-saving driving diagnosis apparatus according to the first embodiment.
[Fig. 5] Fig. 5 is a flowchart showing a flow of racing determining processes in the fuel-saving driving diagnosis apparatus according to the first embodiment.
[Fig. 6] Fig. 6 is a flowchart showing a flow of processes of counting the number of racing times in the fuel-saving driving diagnosis apparatus according to the first embodiment.
[Fig. 7] Fig. 7 is a flowchart showing a flow of advice notifying processes in the fuel-saving driving diagnosis apparatus according to the first embodiment.
[Fig. 8] Fig. 8 is a diagram showing an example of an in-vehicle system in which a fuel-saving driving diagnosis function is dispersed.

### MODES FOR CARRYING OUT THE INVENTION

With reference to the attached drawings, embodiments of a fuel-saving driving diagnosis apparatus, an in-vehicle system, a drive control apparatus, and a fuel-saving driving diagnosis program will be described in detail hereinbelow. In the following, an outline of the fuel-saving driving diagnosis apparatus, the configuration of the fuel-saving driving diagnosis apparatus, and a flow of processes will be described in order and, finally, various modifications of the embodiments will be described.

### First Embodiment

### [Outline of fuel-saving driving diagnosis apparatus]

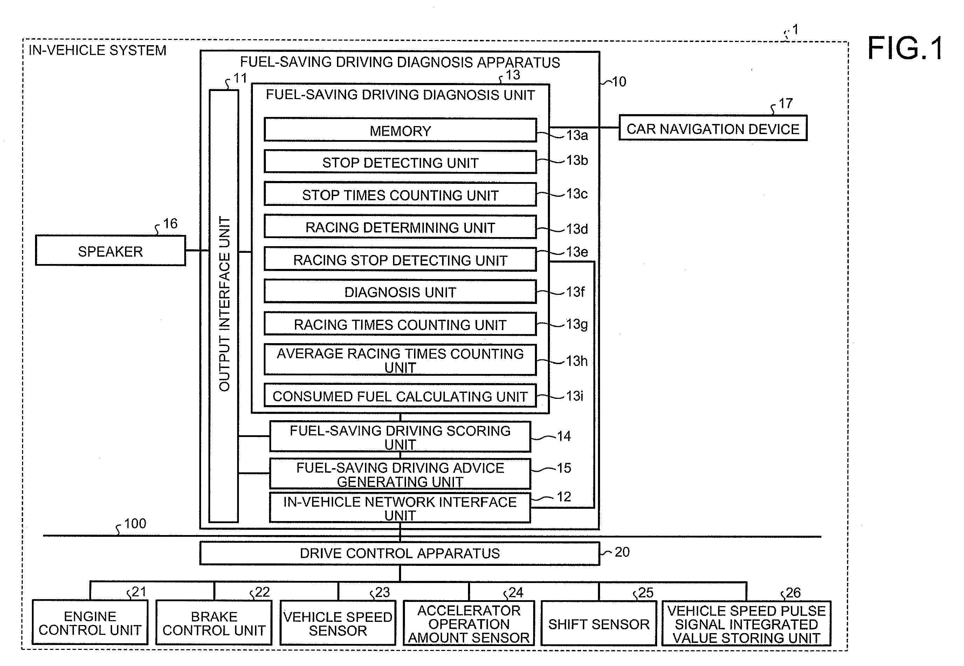

First, using Fig. 1, prior to explanation of a configuration of a fuel-saving driving diagnosis apparatus according to an embodiment, an outline of the fuel-saving driving diagnosis apparatus according to the first embodiment will be described.

As shown in Fig. 1, a fuel-saving driving diagnosis apparatus 10 according to the first embodiment is an apparatus mounted on an in-vehicle system in a vehicle such as a car, and diagnoses fuel-saving driving of the driver of the vehicle. To an in-vehicle system 1, the fuel-saving driving diagnosis apparatus 10, a speaker 16 that outputs sound in the vehicle, and a car navigation device 17 that gives drive assistance to a person in the driver's seat or the like are connected. The in-vehicle system 1 has a drive control apparatus 20 performing various controls on driving of the vehicle, connected to the fuel-saving driving diagnosis apparatus 10 via a bus 100. The fuel-saving driving diagnosis apparatus 10 shown here is illustrated just to explain the present invention. The present invention is not limited to the apparatus. For example, various devices mounted in a car, such as an air conditioner and an air cleaning device may be included.

The fuel-saving driving diagnosis apparatus 10 detects a stop of the vehicle, counts the number of stops and determines whether the vehicle raced after the detection of a stop of the vehicle or not. If it is determined that the stopped vehicle raced, the fuel-saving driving diagnosis apparatus 10 counts the number of stops in which the vehicle raced, and diagnoses fuel-saving driving of the driver based on the number of the stops counted and the number of stops with racing. As a result, the fuel-saving driving diagnosis apparatus 10 can accurately determine racing done by an individual driver.

As a concrete example, the fuel-saving driving diagnosis apparatus 10 counts the number of times the vehicle stops and the number of times racing is done even once after a stop. The fuel-saving driving diagnosis apparatus 10 divides the counted number of stops after which racing was done by the number of times of the stops, and multiplies the result of division by 100, thereby scoring the fuel-saving driving of the driver.

For example, in the case where the counted number of stops followed by racing is "7" and the counted number of stops times is "10", by multiplying the division result "0.7" by 100, the fuel-saving driving of the driver is scored as "70 points". Since the counted number of stops followed by racing is divided by the counted number of the stops, a calculated value increases as the number of times the driver does racing increases.

As described above, the fuel-saving driving diagnosis apparatus 10 does not warn the driver each time racing is done but determines whether racing is done or not when the vehicle stops and diagnoses fuel-saving driving of the driver so that diagnosis can be performed fairly to a person who frequently drives, a person who drives only weekends, and the like. As a result, racing can be accurately determined in terms of each drivers.

### [Configuration of Fuel-saving driving Diagnosis Apparatus]

Next, using Fig. 1, the configuration of the fuel-saving driving diagnosis apparatus according to the first embodiment will be explained. Fig. 1 is a block diagram showing the configuration of an in-vehicle system including the fuel-saving driving diagnosis apparatus according to the first embodiment.

As shown in Fig. 1, in the in-vehicle system 1, the fuel-saving driving diagnosis apparatus 10, the speaker 16, the car navigation device 17, the drive control apparatus 20, an engine control unit 21, a brake control unit 22, a vehicle speed sensor 23, an accelerator operation amount sensor 24, a shift sensor 25, and a vehicle speed pulse signal integrated value storing unit 26 are connected via the bus 100.

Among the elements, the speaker 16 outputs various sound signals input from the fuel-saving driving diagnosis apparatus 10 as sound to the inside of the vehicle, or outputs various sound signals input from a not-shown radio, music player, and the like as sound to the inside of the vehicle. The car navigation device 17 is a general car navigation having a touch panel, a liquid crystal, and the like, displaying map information, road information, and the like, and outputting information on a road on which the vehicle is presently travelling from the stored map information and road information to the fuel-saving driving diagnosis apparatus 10.

### [Configuration of Fuel-saving driving Diagnosis Apparatus 10]

The fuel-saving driving diagnosis apparatus 10 has an output interface unit 11, an in-vehicle network interface unit 12, a fuel-saving driving diagnosis unit 13, a fuel-saving driving scoring unit 14, and a fuel-saving driving advice generating unit 15.

The output interface unit 11 is an interface that controls communication regarding various information transmitted/received between the fuel-saving driving diagnosis apparatus 10 and the speaker 16, for example, receives a fuel-saving driving diagnosis result of the driver output from the fuel-saving driving diagnosis unit 13, a fuel-saving driving scoring result of the driver output from the fuel-saving driving scoring unit 14, a fuel-saving driving advice to the driver output from the fuel-saving driving advice generating unit 15, and the like, and outputs them to the speaker 16.

The in-vehicle network interface unit 12 is an interface that controls communication regarding various information transmitted/received between the fuel-saving driving diagnosis apparatus 10 and the drive control apparatus 20 which will be described later, for example, receives various requests (such as a speed obtaining request and an engine speed obtaining request) output from the fuel-saving driving diagnosis apparatus 10, outputs them to the drive control apparatus 20, receives various responses (such as speed information and engine speed information) output from the drive control apparatus 20, and outputs them to the fuel-saving driving diagnosis apparatus 10.

The fuel-saving driving diagnosis unit 13 is a control unit that diagnoses fuel-saving driving of the driver in the vehicle and has, particularly, as components closely related to the present invention, a memory 13a, a stop detecting unit 13b, a stop times counting unit 13c, a racing determining unit 13d, a racing stop detecting unit 13e, a diagnosis unit 13f, a racing times counting unit 13g, a average racing times counting unit 13h, and a consumed fuel calculating unit 13i.

The memory 13a stores various information generated by the function units (the stop detecting unit 13b to the consumed fuel calculating unit 13i) of the fuel-saving driving diagnosis unit 13 and stores, particularly, as information closely related to the present invention, decision criteria for deciding whether the vehicle raced or not.

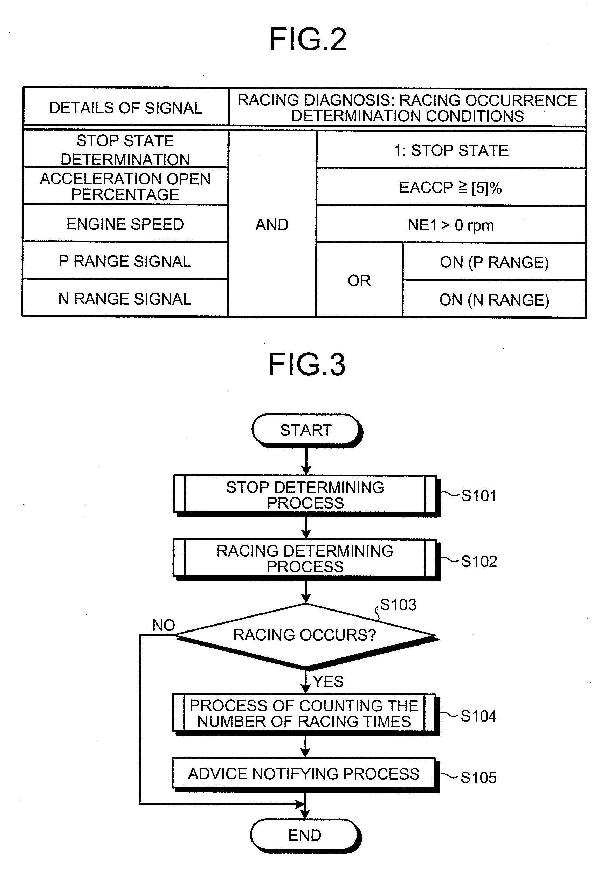

For example, the memory 13a stores as decision criteria, as shown in Fig. 2, using "accelerator open percentage" indicative of the open percentage of the accelerator, "engine speed" indicative of the rotational speed of the engine, "P range signal" indicating that a select lever is in the P range, and "N range signal" indicating that the select lever is in the N range", "EACCP (accelerator open percentage)>=5%", AND, "NE1 (engine speed)>0 rpm", AND, "(P range signal is ON), OR, (N range signal is ON)". Fig. 2 is a diagram showing the criteria for racing determination.

The stop detecting unit 13b detects that the vehicle stops. Concretely, when the vehicle speed information obtained from the drive control apparatus 20 is "vehicle speed=0 km", the stop detecting unit 13b detects that the vehicle stops, and notifies the stop of the vehicle to the stop times counting unit 13c, the racing determining unit 13d, and the racing times counting unit 13g which will be described later.

The stop times counting unit 13c counts the number of stops detected by the stop detecting unit 13b. Concretely, each time the stop of the vehicle is notified by the stop detecting unit 13b, the stop times counting unit 13c increments the number of times that the vehicle stops, and stores the counted number of stops into the memory 13a.

After stop of the vehicle is detected by the stop detecting unit 13b, the racing determining unit 13d determines whether the vehicle raced or not. Concretely, after stop of the vehicle is notified by the stop detecting unit 13b, the racing determining unit 13d determines whether the vehicle raced or not with reference to the criteria of determination of racing stored in the memory 13a. For example, the racing determining unit 13d to which a stop of the vehicle is notified obtains the accelerator open percentage, the engine speed, the P range signal, and the N range signal via the drive control apparatus 20. In the case where an event satisfying the criteria for racing determination stored in the memory 13a occurs even once, that is, in the case where the obtained accelerator open percentage is "5% or higher", the obtained engine speed is "0 rpm or higher", and the obtained P range signal or N range signal is "ON", the racing determining unit 13d determines that the vehicle raced. The racing determining unit 13d which determined that the vehicle raced notifies the racing stop detecting unit 13e of the fact that the vehicle raced.

In the case where the racing determining unit 13d determines that the stopped vehicle raced, the racing stop detecting unit 13e counts the number of stops followed by racing of the vehicle. Concretely, in the case where the racing determining unit 13d determines that the stopped vehicle raced, the racing stop detecting unit 13e counts "the number of stops followed by racing is done", indicating that the vehicle stopped and raced, and stores the counted number of stops into the memory 13a.

Based on the number of stops counted by the stop times counting unit 13c and the number of stops followed by racing was done counted by the racing stop detecting unit 13e, the diagnosis unit 13f diagnoses the fuel-saving driving of the driver. Concretely, the diagnosis unit 13f obtains the number of stops counted and stored by the stop times counting unit 13c and the number of stops followed by racing was done, counted and stored by the racing stop detecting unit 13e from the memory 13a at a predetermined timing. The diagnosis unit 13f divides the number of stops followed by racing which is obtained from the memory 13a by the number of stops to calculate the ratio that the driver stopped the vehicle and raced, and stores the calculation result into the memory 13a.

For example, in the case where the number of stops counted and stored by the stop times counting unit 13c is "7" and the number of stops followed by racing which is counted and stored by the racing stop detecting unit 13e is "10", the diagnosis unit 13f calculates the ratio "0.2" that the driver stopped and raced, and stores the calculation result "0.7" into the memory 13a. The predetermined timing of calculating the ratio that the driver stops and does racing by the diagnosis unit 13f may be, for example, in a period 1Trip from start of the engine to the end of the engine or at predetermined intervals such as every two hours since start of the engine. The predetermined timing can be arbitrarily determined.

Each time the stop detecting unit 13b detects that the vehicle stops, the racing times counting unit 13g further counts the number of times of racing done by the vehicle whose stop was detected during the stop. Concretely, after the stop detecting unit 13b detects that the vehicle stopped, the racing times counting unit 13g obtains the accelerator open percentage, the engine speed, the P range signal, and the N range signal via the drive control apparatus 20. The racing times counting unit 13g counts the number of times an event satisfying the criteria of racing stored in the memory 13a occurs, that is, the number of times an event satisfying that the obtained accelerator open percentage is "5% or higher", the obtained engine speed is "0 rpm or higher", and the obtained P range signal or N range signal is "ON", and stores the counted number of times as the number of racing times into the memory 13a.

The average racing times counting unit 13h calculates the average number of racing times indicative of the number of times racing is done after one stop from the number of stops counted by the stop times counting unit 13c and the number of racing times counted by the racing times counting unit 13g. Concretely, the average racing times counting unit 13h obtains the number of stops counted by the stop times counting unit 13c and the number of racing times counted by the racing times counting unit 13g from the memory 13a. The average racing times counting unit 13h divides the obtained number of racing times by the obtained number of stops, thereby calculating the average number of racing times indicative of the number of times racing is done after one stop, and stores the calculated average number of racing times into the memory 13a. For example, when the obtained number of racing times is "100" and the obtained number of stops is "10", the average racing times counting unit 13h calculates the average number of racing times indicative of the number of racing after one stop as "10", and stores the calculated average number of racing times "10" into the memory 13a.

The consumed fuel calculating unit 13i calculates fuel consumed by racing from the number of racing times counted by the racing times counting unit 13g. Concretely, the consumed fuel calculating unit 13i obtains the number of racing times counted by the racing times counting unit 13g from the memory 13a, multiplies the obtained number of racing times with the predetermined fuel consumed per racing to calculate fuel consumed in vain, and stores the calculated fuel consumed in vain into the memory 13a.

For example, in the case where the obtained number of racing times is "100" and the predetermined fuel consumed per racing is "0.05 litter", the consumed fuel calculating unit 13i calculates the fuel consumed in vain as "5 litters" and stores the calculated fuel consumed in vain "5 litters" into the memory 13a. The predetermined fuel consumed per predetermined racing can be preliminarily determined based on the cubic capacity of the vehicle, the type of gasoline used (regular gasoline, high-octane gasoline, or the like), vehicle type (hybrid car, general gasoline car, or the like), and the like.

As a diagnosis of fuel-saving driving of the driver, the fuel-saving driving scoring unit 14 scores the fuel-saving driving of the driver from the ratio of the number of stops followed by racing counted by the racing determining unit 13d in the number of stops counted by the stop times counting unit 13c. Concretely, the fuel-saving driving scoring unit 14 obtains the ratio of racing stored by the diagnosis unit 13f from the memory 13a, multiplies it by 100 to score the fuel-saving driving of the driver, and stores the score into the memory 13a. For example, in the case where the ratio of racing stored by the diagnosis unit 13f is "0.7", the fuel-saving driving scoring unit 14 scores the fuel-saving driving of the driver as "70 points", and stores it into the memory 13a.

Based on the result of diagnosis of the diagnosis unit 13f, the fuel-saving driving advice generating unit 15 notifies the driver of advice on fuel-saving driving. Concretely, for example, the fuel-saving driving advice generating unit 15 obtains the ratio of racing stored in the memory 13a by the diagnosis unit 13f, generates a message according to the ratio, and notifies the driver of the message. For example, in the case where the ratio of racing is "0.7", the fuel-saving driving advice generating unit 15 generates a message such that "You do racing too much. Try to drive environmentally friendly.", and notifies the driver of the advice of fuel-saving driving.

The fuel-saving driving advice generating unit 15 may notify the driver of the advice on fuel-saving driving based on the result of scoring by the fuel-saving driving scoring unit 14. For example, the fuel-saving driving advice generating unit 15 obtains the score result "70 points" stored in the memory 13a by the fuel-saving driving scoring unit 14, generates a message such that "You do racing too much. Try to drive environmentally friendly.", and notifies the driver of the advice of fuel-saving driving.

The fuel-saving driving advice generating unit 15 can further notify of the driver of at least one selected from the number of racing times counted by the racing times counting unit 13g, the average number of racing times calculated by the unit 13h for calculating the average number of racing times, and the consumed fuel calculated by the consumed fuel calculating unit 13i. Concretely, the fuel-saving driving advice generating unit 15 may notify the selected message after determining whether each of the number of racing times, the average number of racing times, and the consumed fuel is equal to or larger than a corresponding threshold or not.

For example, in the case where the number of racing times is equal to or larger than a threshold α, the average number of racing times is equal to or larger than a threshold β, and the consumed fuel is equal to or larger than γ, that is, in the case where all of the numbers of times are equal to or larger than the thresholds, the fuel-saving driving advice generating unit 15 generates a message strongly urging the driver to perform fuel-saving driving such as "You drive with much racing which is absolutely unnecessary. Try to drive environmentally friendly" and sends the message. In the case where only one of the above-described numbers of times exceeds the threshold, the fuel-saving driving advice generating unit 15 may generate a message urging the driver to perform fuel-saving driving such as "You tend to do racing. Try to maintain environmentally friendly driving". In the case where two numbers out of the above-described numbers of times exceed the respective thresholds, the fuel-saving driving advice generating unit 15 can generate a message strongly urging the driver to perform fuel-saving driving such as "You do racing too much. Always try to maintain environmentally friendly driving" and give notice of it.

A method of generating a message by the fuel-saving driving advice generating unit 15 can be realized by using a format or the like associated with the ratio calculated by the diagnosis unit 13f, a result of scoring of the fuel-saving driving scoring unit 14, or the like.
It is also possible to compare the data with the thresholds and select "message A or B". As an example of the format, a format such as "You do racing very much. (xx) points. Try to maintain environmentally friendly driving." may be stored in the memory 13a. As a comparison with the thresholds, for example, "message A" for a score result which is less than a threshold A, "message B" for a score result which is equal to or larger than the threshold A, and the like are stored in the memory 13a. The fuel-saving driving advice generating unit 15 compares the result of scoring of the fuel-saving driving scoring unit 14 with the threshold and selects and gives notice of the message.

Also for the number of racing times, the average number of racing times, and the consumed fuel, the above-described example of determination in comparison with the thresholds can be used. Further, "message D" used when all of the number of racing times, the average number of racing times, and the consumed fuel are equal to or larger than the threshold B, "message E" used when two of the number of racing times, the average number of racing times, and the consumed fuel are equal to or larger than the threshold B, and the like are stored in the memory 13a. In such a manner, finer message selection can be executed, and it can more strongly encourage the driver to drive environmentally friendly. Although the example of selecting a message by using the two thresholds A and B has been described above, it is not limited to the example. A message may be selected by using three or more thresholds.

### [Configuration of Drive Control Apparatus 20 and Various Devices]

Next, the drive control apparatus 20 performing various controls on driving of the vehicle and the devices connected to the drive control apparatus 20 will be described. The devices connected to the drive control apparatus 20 are the engine control unit 21, the brake control unit 22, the vehicle speed sensor 23, the accelerator operation amount sensor 24, the shift sensor 25, and the vehicle speed pulse signal integrated value storing unit 26.

The drive control apparatus 20 obtains various information from the devices connected and outputs it to the fuel-saving driving diagnosis apparatus 10. The drive control apparatus 20 can obtain various information and output it to the fuel-saving driving diagnosis apparatus 10 periodically or at a trigger such as reception of an acquisition request from the fuel-saving driving diagnosis apparatus 10 or at predetermined timings (for example, when the vehicle speed becomes zero). The various information obtained by the drive control apparatus 20 and output to the fuel-saving driving diagnosis apparatus 10 includes, for example, vehicle speed, engine speed, a select lever signal, an accelerator operation amount (accelerator open percentage), and the like.

The drive control apparatus 20 obtains various information from the engine control unit 21, the brake control unit 22, the vehicle speed sensor 23, the accelerator operation amount sensor 24, the shift sensor 25, the vehicle speed pulse signal integrated value storing unit 26, and the like, and controls driving of the vehicle. For example, when the drive control apparatus 20 obtains information that the accelerator open percentage became high from the accelerator operation amount sensor 24, it controls the engine control unit 21 to increase the engine speed.

The engine control unit 21 controls a gasoline engine that drives a vehicle. Concretely, the engine control unit 21 accepts an engine speed increase request, an engine speed decrease request, and the like notified from the drive control apparatus 20 and controls the corresponding engine speed. The engine control unit 21 outputs the engine speed which is presently controlled to the drive control apparatus 20 at any trigger in the description of the drive control apparatus 20.

The brake control unit 22 is connected to a brake pedal of a vehicle not-shown or the like, controls a mechanical brake in accordance with a brake operation of the driver, and controls so as to use it as a regenerative brake in accordance with a shift lever operation of the driver. The vehicle speed sensor 23 detects the present speed of the vehicle. Concretely, the vehicle speed sensor 23 detects the present speed of the vehicle displayed in a speed meter or the like and outputs the detected vehicle speed to the drive control apparatus 20 at any trigger in the description of the drive control apparatus 20.

The accelerator operation amount sensor 24 detects the amount of accelerator operation of the present driver. Concretely, the accelerator operation amount sensor 24 is connected to an accelerator pedal or the like of a vehicle not-shown, detects the accelerator operation amount in accordance with the operation on the accelerator of the driver and, at a trigger in the description of the drive control apparatus 20, outputs the detected accelerator operation amount to the drive control apparatus 20.

The shift sensor 25 detects the position of the shift lever (select lever) of the vehicle. Concretely, the shift sensor 25 is connected to the not-shown shift lever of the vehicle or the like, detects the shift lever in accordance with the shift lever operation of the driver, and outputs a range signal indicative of the detected shift lever at any trigger in the description of the drive control apparatus 20.

The vehicle speed pulse signal integrated value storing unit 26 is a value obtained by integrating vehicle speed pulse signal one by one upon detection in accordance with each rotation of a pulse sensor provided on the inner diameter of a wheel of a vehicle. That is, the vehicle speed pulse signal integrated value is a value of integration of the number of rotations of the wheel. By calculating the vehicle speed pulse signal integrated value of predetermined time and multiplying the calculated value by the length of the outer circumference of the wheel, a travel distance of the vehicle in the predetermined time can be calculated. The vehicle speed pulse signal integrated value storing unit 26 outputs the calculated travel distance of the vehicle to the drive control apparatus 20 at any trigger in the description of the drive control apparatus 20.

### [Processes by Fuel-saving driving Diagnosis Apparatus]

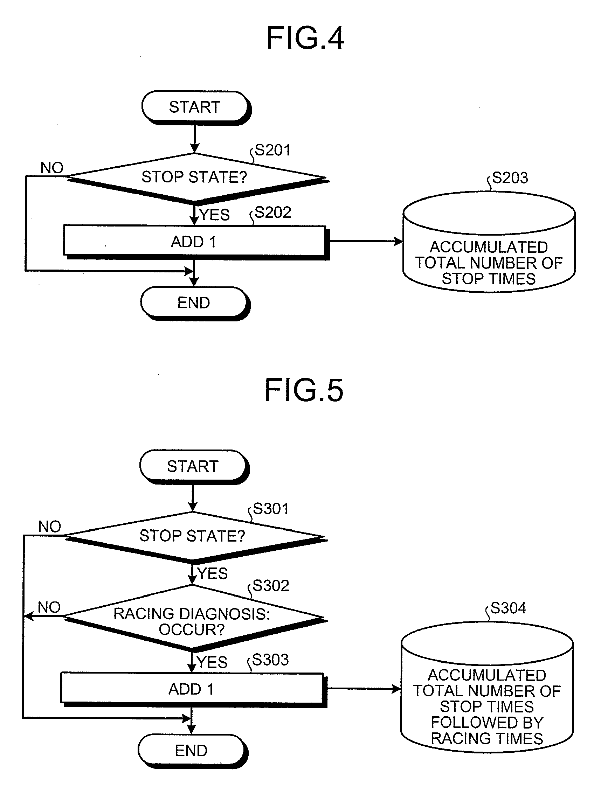

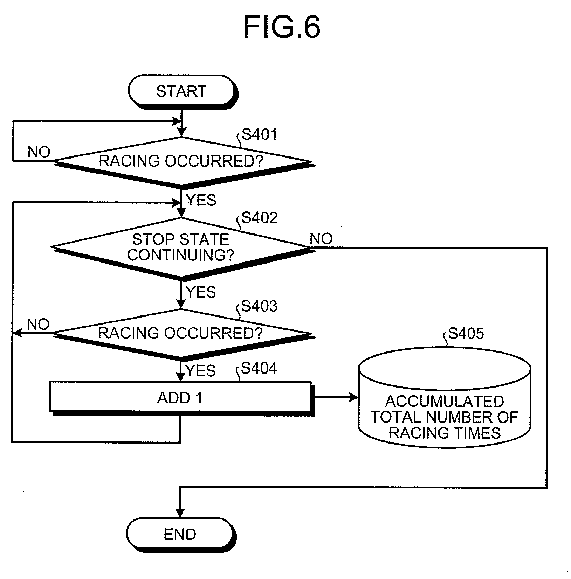

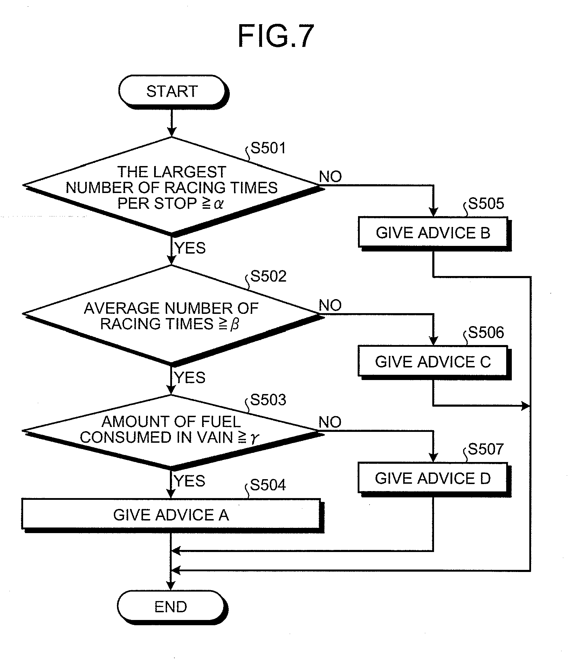

Next, using Figs. 3 to 7, a process performed by the fuel-saving driving diagnosis apparatus according to the first embodiment will be described. Fig. 3 is a flowchart showing a flow of fuel-saving driving diagnosing processes in the fuel-saving driving diagnosis apparatus according to the first embodiment. Fig. 4 is a flowchart showing a flow of processes of counting the number of stops in the fuel-saving driving diagnosis apparatus according to the first embodiment. Fig. 5 is a flowchart showing a flow of racing determining processes in the fuel-saving driving diagnosis apparatus according to the first embodiment. Fig. 6 is a flowchart showing a flow of processes of counting the number of racing times in the fuel-saving driving diagnosis apparatus according to the first embodiment. Fig. 7 is a flowchart showing a flow of advice notifying processes in the fuel-saving driving diagnosis apparatus according to the first embodiment.

### [Flow of Fuel-saving driving Diagnosing Process]

First, using Fig. 3, a flow of the fuel-saving driving diagnosing processes in the fuel-saving driving diagnosis apparatus according to the first embodiment will be described. As shown in Fig. 3, the fuel-saving driving diagnosis apparatus 10 executes a stop determining process at a predetermined trigger (for example, when the P range signal or N range signal in the range signals of the select lever is turned on) (step S101).

Subsequently, the fuel-saving driving diagnosis apparatus 10 executes the racing determining process (step S102) and, in the case where it is determined that racing occurs in the racing determining process (Yes in step S103), executes a process of counting the number of racing times and an advice notifying process (steps S104 and S105).

On the other hand, in the case where occurrence of racing is not determined in the racing determining process, that is, when the vehicle did no racing (No in step S103), the fuel-saving driving diagnosis apparatus 10 finishes the fuel-saving driving diagnosing process.

### [Flow of Processes of Counting Number of Stops]

Next, using Fig. 4, the stop determining process shown in Fig. 3 will be described. As shown in Fig. 4, the fuel-saving driving diagnosis apparatus 10 determines whether the vehicle is in a stop state or not at a predetermined trigger (step S201) and, when it is determined that the vehicle is in the stop state (Yes in step S201), counts the number of stops (adds 1 to the number of stops) and stores the resultant number in the memory 13a (steps S202 and S203). When it is determined that the vehicle is not in the stop state (No in step S201), the fuel-saving driving diagnosis apparatus 10 finishes the stop determining process.

A concrete example will be described. In the case where the P range signal or N range signal out of the range signals of the select lever is turned on, the fuel-saving driving diagnosis apparatus 10 determines whether the vehicle speed obtained from the drive control apparatus 20 is "0" or not. In the case where the vehicle speed is "0", the fuel-saving driving diagnosis apparatus 10 determines that the vehicle is in the stop state and counts the number of stops. In the case where the vehicle speed is not "0", the fuel-saving driving diagnosis apparatus 10 determines that the vehicle is not in the stop state and finishes the stop determining process.

### [Flow of Racing Determining Processes]

Next, using Fig. 5, a flow of the racing determining processes shown in Fig. 3 will be described. As shown in Fig. 5, when it is determined that the vehicle is in the stop state (Yes in step S301), the fuel-saving driving diagnosis apparatus 10 determines whether the vehicle in the stop state raced or not (step S302).

When it is determined that the vehicle in the stop state raced (Yes in step S302), the fuel-saving driving diagnosis apparatus 10 counts the number of times of stop followed by racing of the vehicle (adds 1) and stores the resultant number of times in the memory 13a (steps S303 and S304).

A concrete example will be described. The fuel-saving driving diagnosis apparatus 10 which determined that the vehicle is in the stop state obtains the accelerator open percentage, the engine speed, and the P range signal or N range signal via the drive control apparatus 20. In the case where "the accelerator open percentage is "5% or higher", the engine speed is "0 rpm or higher", and the obtained P range signal or N range signal is "ON"", the fuel-saving driving diagnosis apparatus 10 determines that the vehicle raced, counts the number of times of stop followed by racing, indicating that racing was done, and stores the resultant number of times into the memory 13a.

On the other hand, in the case where it is not determined that the vehicle in the stop state raced, that is, the vehicle did no racing (No in step S302), the fuel-saving driving diagnosis apparatus 10 finishes the process.

### [Flow of Processes of Counting the Number of Racing Times]

Next, using Fig. 6, a flow of the processes of counting the number of racing times shown in Fig. 3 will be described. As shown in Fig. 6, in the case where the vehicle continues in the stop state (Yes in steps S401 and S402), the fuel-saving driving diagnosis apparatus 10 which determined that the vehicle in the stop state raced in Fig. 5 determines whether the vehicle raced or not in a manner similar to Fig. 5 (step S403).

Each time it is determined that the vehicle in the stop state raced (Yes in step S403), the fuel-saving driving diagnosis apparatus 10 counts the number of racing times (adds 1) and stores the resultant into the memory 13a (steps S404 and S405). When it is not determined that the vehicle in the stop state raced, that is, the vehicle did no racing (No in step S403), the fuel-saving driving diagnosis apparatus 10 returns to step S402 and executes the following process.

On the other hand, in the case where the vehicle is not continuing the stop state, that is, in the case where the vehicle speed of the vehicle becomes larger than "0" (No in step S402), the fuel-saving driving diagnosis apparatus 10 finishes the process of counting the number of racing times.

### [Flow of Advice Notifying Processes]

Next, using Fig. 7, a flow of the advice notifying processes shown in Fig. 3 will be described. As shown in Fig. 7, in the case where the number of racing times calculated in Fig. 6 is equal to or larger than the threshold α (Yes in step S501), the average number of racing times is equal to or larger than the threshold β (Yes in step S502), and the amount of fuel consumed in vain by racing is equal to or larger than the threshold γ (Yes in step S503), the fuel-saving driving diagnosis apparatus 10 generates a message strongly urging the driver to perform fuel-saving driving (advice A) and gives notice of it (step S504).

In the case where the number of racing times calculated in Fig. 6 is equal to or less than the threshold α (No in step S501), the fuel-saving driving diagnosis apparatus 10 generates a message urging the driver to perform fuel-saving driving (advice B) and gives notice of it (step S505).

In the case where the number of racing times calculated in Fig. 6 is equal to or larger than the threshold α (Yes in step S501) and the average number of racing times is less than the threshold β (No in step S502), the fuel-saving driving diagnosis apparatus 10 generates a message urging the driver to perform the fuel-saving driving more strongly than the advice B (advice C) and gives notice of it (step S506).

In the case where the number of racing times calculated in Fig. 6 is equal to or larger than the threshold α (Yes in step S501), the average number of racing times is equal to or larger than the threshold β (Yes in step S502), and the amount of fuel consumed in vain by racing is less than the threshold γ (No in step S503), the fuel-saving driving diagnosis apparatus 10 generates a message urging the driver to perform the fuel-saving driving more strongly than the advice B and the advice C (advice D) and gives notice of it (step S507).

Since the method of counting the average number of racing times, the method of calculating the amount of fuel used in vain, and the like have been described with reference to Fig. 2, the description will not be repeated here.

### [Effects of the First Embodiment]

As described above, according to the first embodiment, the fuel-saving driving diagnosis apparatus 10 detects that the vehicle stopped, counts the number of stops, and determines whether or not the vehicle raced after detection that the vehicle stopped. When it is determined that the stopped vehicle raced, the fuel-saving driving diagnosis apparatus 10 counts the number of times of stop followed by racing of the vehicle, and diagnoses fuel-saving driving of the driver based on the counted number of stops and the counted number of times of stop followed by racing. As a result, the fuel-saving driving diagnosis apparatus 10 diagnoses the frequency of occurrence of racing and a habit of the driver, and presents a result of diagnosis to the driver, so that knowledge and awareness on fuel-saving driving of the driver can be improved. In addition, the fuel-saving driving diagnosis apparatus 10 can fairly diagnoses, for example, a driver who frequently drives, a driver who drives on only weekends, and the like. As a result, racing of each driver can be accurately determined.

According to the first embodiment, the fuel-saving driving diagnosis apparatus 10 diagnoses fuel-saving driving of the driver, and scores the fuel-saving driving of the driver from the ratio of the number of times of stop followed by racing, which is counted in the counted number of stops. As a result, the fuel-saving driving diagnosis apparatus 10 can accurately determine racing with information which is easily understood by the driver (user).

According to the first embodiment, the fuel-saving driving diagnosis apparatus 10 notifies the driver of advice of fuel-saving driving based on the diagnosis result, so that it is possible to urge each of the drivers to perform fuel-saving driving (environmentally friendly driving).

According to the first embodiment, the fuel-saving driving diagnosis apparatus 10 selects at least one of the counted number of racing times, the counted average number of racing times, and the calculated consumed fuel based on a predetermined condition, and further gives notice of it. As a result, the fuel-saving driving diagnosis apparatus 10 can urge a driver to perform fuel-saving driving (environmentally friendly driving) with information which is easily understood by the driver (user).

According to the first embodiment, in the case where the select lever of the vehicle is in the P range or N range, the fuel-saving driving diagnosis apparatus 10 determines whether the vehicle raced or not. As a result, the fuel-saving driving diagnosis apparatus 10 can determine whether the vehicle stopped or not more accurately.

According to the first embodiment, in the case where engine speed of a vehicle becomes equal to or higher than predetermined speed and accelerator open percentage of the vehicle becomes equal to or higher than a predetermined threshold, the fuel-saving driving diagnosis apparatus 10 determines that the vehicle raced. As a result, the fuel-saving driving diagnosis apparatus 10 can determine racing as to each driver more accurately.

### Second Embodiment

Although the embodiment of the present invention has been described above, the present invention is not limited to the foregoing embodiment but can be also carried out in various different modes. In the following, different embodiments which are categorized in (1) advice generating method, (2) functional configuration, (3) system configuration, and the like, and (4) program will be described.

### (1) Advice Generating Method

For example, in the first embodiment, an example of notifying the driver of an advice generated as sound has been described. However, the present invention is not limited to the example. For example, an advice can be generated as image data and display-outputted to the car navigation device 17, a not-shown head-up display, and the like.

### (2) Functional Configuration

For example, in the first embodiment, the case where the fuel-saving driving diagnosis unit 13 has the memory 13a, the stop detecting unit 13b, the stop times counting unit 13c, the racing determining unit 13d, the racing stop detecting unit 13e, the diagnosis unit 13f, the racing times counting unit 13g, the average racing times counting unit 13h, and the consumed fuel calculating unit 13i has been described. However, the present invention is not limited to the case. The fuel-saving driving diagnosis unit 13 does not have to have all of the functions. For example, also in a configuration that the fuel-saving driving diagnosis unit 13 has the stop detecting unit 13b, the stop times counting unit 13c, the racing determining unit 13d, the racing stop detecting unit 13e, and the diagnosis unit 13f, racing of each of drivers can be accurately determined. In the case where the memory 13a is not provided, when every functional unit has a temporary area, the process can be executed.

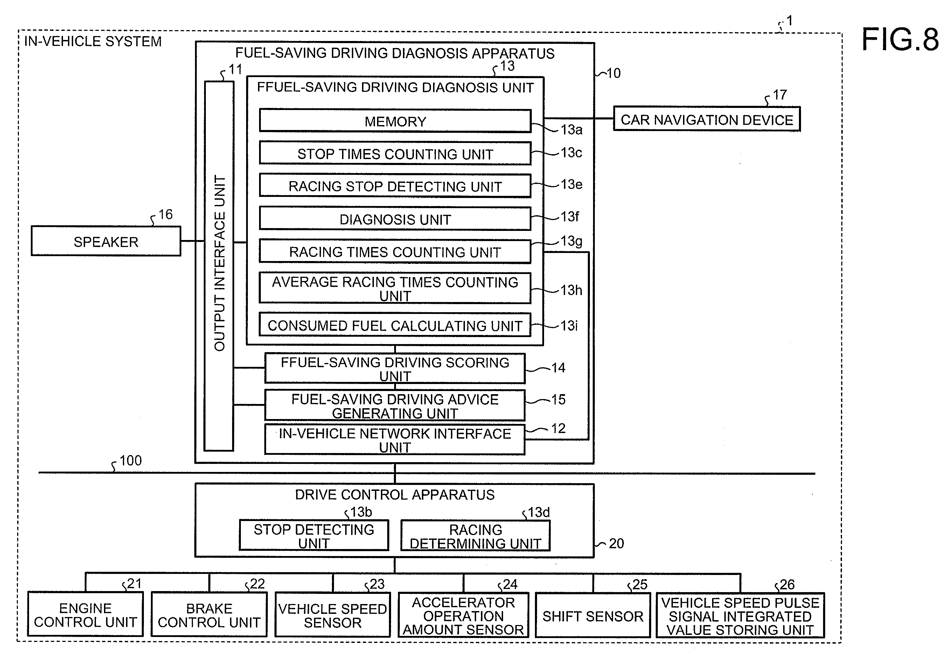

Functions can be dispersed to the fuel-saving driving diagnosis unit 13 and the drive control apparatus 20. For example, as shown in Fig. 8, it is also possible to dispersedly provide the fuel-saving driving diagnosis unit 13 with the memory 13a, the stop times counting unit 13c, the racing stop detecting unit 13e, the diagnosis unit 13f, the racing times counting unit 13g, the average racing times counting unit 13h, and the consumed fuel calculating unit 13i and provide the drive control apparatus 20 with the stop detecting unit 13b and the racing determining unit 13d. The dispersion is not limited to the example shown in Fig. 8. For example, a stop detection times counting unit obtained by integrating the stop detecting unit 13b and the stop times counting unit 13c may be provided. Fig. 8 is a diagram showing an example of the in-vehicle system in which the fuel-saving driving diagnosis function is dispersed.

In the vehicle system 1, the fuel-saving driving diagnosis unit 13 and the drive control apparatus 20 do not have to be always separately provided as shown in Fig. 1. For example, a configuration in which the drive control apparatus 20 is incorporated into the fuel-saving driving diagnosis unit 13 may be employed.

In the first embodiment, a car other than a hybrid car using only gasoline as energy has been described as an example. The fuel-saving driving diagnosis apparatus can be similarly applied to an electric car such as a hybrid car.

### (3) System Configuration and the like

All or part of the processes described as processes which are automatically performed out of the processes described in the embodiment can be manually performed. The process procedure, the control procedure, concrete names, and information including various data and parameters shown in the above-described document and the drawings (for example, Fig. 2) can be arbitrarily changed except for a specially mentioned case.

Each of the components of the apparatuses shown in the diagrams is a functional conceptual one and does not always have to be physically constructed as shown in the diagrams. That is, concrete forms of dispersion/integration of each apparatus are not limited to those shown in the diagrams. All or part of the components can be functionally or physically dispersed or integrated on an arbitrary unit basis (for example, the racing determining unit 13d and the racing stop detecting unit 13e may be integrated) in accordance with various loads, use situations, and the like. Further, all or part of the process functions performed in each apparatus can be realized by a CPU and a program analyzed and executed by the CPU, or can be realized as hardware by wired logics.

### (4) Program

The fuel-saving driving diagnosing method described in the embodiment can be realized by executing a prepared program by a computer such as a personal computer or a workstation. The program can be distributed via a network such as the Internet. The program can be recorded on a computer-readable recording medium such as a hard disk, a flexible disk (FD), a CD-ROM, an MO, or a DVD, read from the recording medium by a computer, and executed.

### INDUSTRIAL APPLICABILITY

As described above, the fuel-saving driving diagnosis apparatus, the in-vehicle system, the drive control apparatus, and the fuel-saving driving diagnosis program according to the present invention are useful for diagnosing fuel-saving driving of a driver in a vehicle and, particularly, suitable for accurately determining racing of each of drivers.

### EXPLANATIONS OF LETTERS OR NUMERALS

- 1: in-vehicle system
- 10: fuel-saving driving diagnosis apparatus
- 11: output interface unit
- 12: in-vehicle network interface unit
- 13: fuel-saving driving diagnosis unit
- 13a: memory
- 13b: stop detecting unit
- 13c: stop times counting unit
- 13d: racing determining unit
- 13e: racing stop detecting unit
- 13f: diagnosis unit
- 13g: racing times counting unit
- 13h: average racing times counting unit
- 13i: consumed fuel calculating unit
- 14: fuel-saving driving scoring unit
- 15: fuel-saving driving advice generating unit
- 16: speaker
- 17: car navigation device
- 20: drive control apparatus
- 21: engine control unit
- 22: brake control unit
- 23: vehicle speed sensor
- 24: accelerator operation amount sensor
- 25: shift sensor
- 26: vehicle speed pulse signal integrated value storing unit
- 100: bus

## Claims

1. A fuel-saving driving diagnosis apparatus comprising:
a stop detecting unit that detects that a vehicle stopped;
a stop times counting unit that counts the number of stops detected by the stop detecting unit;
a racing determining unit that determines whether the vehicle raced or not after the stop detecting unit detects that the vehicle stopped;
a racing stop detecting unit that counts the number of times of stop followed by racing which is determined by the racing determining unit; and
a fuel-saving driving diagnosis unit that diagnoses fuel-saving driving based on the number of stops counted by the stop times counting unit and the number of stops followed by racing, counted by the racing stop detecting unit.

2. The fuel-saving driving diagnosis apparatus according to claim 1, wherein the fuel-saving driving diagnosis unit scores fuel-saving driving of the driver from ratio of the number of stops followed by racing which is counted by the racing stop detecting unit in the number of stops counted by the stop times counting unit.

3. The fuel-saving driving diagnosis apparatus according to claim 1, further comprising an advice notifying unit that notifies the driver of an advice of fuel-saving driving based on a result of diagnosis of the fuel-saving driving diagnosis unit.

4. The fuel-saving driving diagnosis apparatus according to claim 1, further comprising:
a racing times counting unit that counts the number of times of racing done by the vehicle detected to be stopped during the stop for each time the stop detecting unit detects that the vehicle stopped;
an average racing times counting unit that calculates an average number of times of racing indicating the number of times of racing done per stop, from the number of stops counted by the stop times counting unit and the number of racing times counted by the racing times counting unit; and
a consumed fuel calculating unit that calculates fuel consumed by the racing from the number of racing times counted by the racing times counting unit, wherein
the advice notifying unit selects at least one of the number of racing times counted by the racing times counting unit, the average number of racing times calculated by the average racing times counting unit, and the consumed fuel calculated by the consumed fuel calculating unit based on a predetermined condition, and further notifies it.

5. The fuel-saving driving diagnosis apparatus according to claim 1, wherein, when a select lever of a vehicle is in a P range or an N range, the racing determining unit determines whether the vehicle raced or not.

6. The fuel-saving driving diagnosis apparatus according to claim 1, wherein, when engine speed of a vehicle becomes equal to or higher than a predetermined speed and accelerator open percentage of the vehicle becomes equal to or higher than a predetermined threshold, the racing determining unit determines that the vehicle raced.

7. An in-vehicle system having a drive control apparatus performing various controls on driving of a vehicle and a fuel-saving driving diagnosis apparatus diagnosing fuel-saving driving of a driver in a vehicle, wherein
the drive control apparatus comprises:
a stop detecting unit that detects that the vehicle stopped; and
a racing determining unit that determines whether the vehicle raced or not after the stop detecting means detects that a vehicle stopped, and
the fuel-saving driving diagnosis apparatus comprises:
a stop times counting unit that counts the number of times that the drive control apparatus detects that the vehicle stopped;
a racing stop detecting unit that counts the number of times of stop followed by racing which is determined by the drive control apparatus;
a racing stop detecting unit, when the drive control apparatus determines that the stopped vehicle raced, that counts the number of times of stop followed by racing done by the vehicle; and
a fuel-saving driving diagnosis unit that diagnoses fuel-saving driving based on the number of stops counted by the stop times counting unit and the number of times of stop followed by racing, counted by the racing stop detecting unit.

8. A drive control apparatus in an in-vehicle system having the drive control apparatus performing various controls on driving of a vehicle and a fuel-saving driving diagnosis apparatus diagnosing fuel-saving driving of a driver in a vehicle, the drive control apparatus comprising:
a stop detecting unit that detects that the vehicle stopped; and
a racing determining unit that determines whether the vehicle raced or not after the stop detecting unit detects that the vehicle stopped.

9. A fuel-saving driving diagnosis program that causes a computer to perform:
a stop detecting step of detecting that a vehicle stopped;
a stop times counting step of counting the number of stops detected at the stop detecting step;
a racing determining step of determining whether the vehicle raced or not after the stop detecting step detects that the vehicle stopped;
a racing stop detecting step of counting the number of times of stop followed by racing which is determined at the racing determining step; and
a fuel-saving driving diagnosis step of diagnosing fuel-saving driving based on the number of stops counted at the stop times counting step and the number of stops followed by racing, counted by the racing stop detecting unit.
